(19) Europäisches Patentamt
European Patent Office
Office européen des brevets

(11) EP 3 211 037 A1

(12) EUROPEAN PATENT APPLICATION
published in accordance with Art. 153(4) EPC

(43) Date of publication:
**30.08.2017 Bulletin 2017/35**

(21) Application number: **15852240.9**

(22) Date of filing: **14.09.2015**

(51) Int Cl.:
***C08L 69/00*** *(2006.01)* ***C08G 64/08*** *(2006.01)*
***C08J 5/00*** *(2006.01)*

(86) International application number:
**PCT/JP2015/076057**

(87) International publication number:
**WO 2016/063656 (28.04.2016 Gazette 2016/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **20.10.2014 JP 2014214091**

(71) Applicant: **Idemitsu Kosan Co., Ltd**
**Tokyo 100-8321 (JP)**

(72) Inventor: **AOKI, Yusuke**
**Ichihara-shi**
**Chiba 299-0193 (JP)**

(74) Representative: **Hoffmann Eitle**
**Patent- und Rechtsanwälte PartmbB**
**Arabellastraße 30**
**81925 München (DE)**

(54) **POLYCARBONATE RESIN COMPOSITION INCLUDING RECYCLED MATERIAL, AND MOLDED ARTICLE OF SAME**

(57) Provided is a polycarbonate-based resin composition, including a polycarbonate-based resin composition (A) including: 90 mass% to 10 mass% of a polycarbonate-polyorganosiloxane copolymer (A-1) ; and 10 mass% to 90 mass% of a recycled material (A-2) containing a polycarbonate-based resin, in which a content of a polyorganosiloxane block moiety in the polycarbonate-based resin composition is from 0.7 mass% to 40 mass%.



Printed by Jouve, 75001 PARIS (FR)

**Description**

TECHNICAL FIELD

The present invention relates to a polycarbonate-based resin composition containing a recycled material of a pellet or a molded article containing a polycarbonate-based resin, and a polycarbonate-polyorganosiloxane copolymer, and a molded article of the composition.

BACKGROUND ART

A polycarbonate resin (hereinafter sometimes abbreviated as "PC resin") is excellent in, for example, transparency, mechanical characteristics, thermal stability, electrical properties, and weatherability, and hence the resin has been used in an optical molded article, such as a light-guiding plate, a lens, or an optical disc, by exploiting the characteristics. In addition, many polymer alloys each containing an aromatic polycarbonate resin and any other thermoplastic resin have been developed, and have been widely used in the fields of, for example, OA equipment, electrical and electronic equipment, automobiles, and other sundries. In particular, the number of opportunities to use a resin composition obtained by blending an aromatic polycarbonate resin with a styrene-based resin typified by an ABS resin in a part, such as a casing for OA equipment or electrical and electronic equipment, has been significantly increasing in recent years. Such composition formed of the aromatic polycarbonate resin and the styrene-based resin has been widely used in various fields including OA equipment because of its excellent characteristics, such as flowability, an EMI shield property, heat resistance, and light stability.

In recent years, investigations have been vigorously made on so-called recycling in which a product that has become unnecessary is recovered and reused from the viewpoints of the reuse of resources and environmental protection. An investigation has been made on the use of a recovered polycarbonate resin recovered from a waste product or the like as the polycarbonate resin.

In, for example, Patent Document 1, there is a disclosure that a high-quality optical disc is obtained stably at all times by using an optical polycarbonate resin obtained by: recovering a polycarbonate resin from, for example, a recovered optical disc that is unused or has already been used; and blending the recovered polycarbonate resin and a virgin optical polycarbonate resin.

In Patent Document 2, there is a disclosure of a flame-retardant resin composition achieving a high level of balance among impact resistance, flameretardancy, heat resistance, and flowability while having a high recycling ratio through the combination of a recycled material, a polycarbonate-polyorganosiloxane copolymer resin, and various additives.

However, in Patent Document 1, there is not any disclosure of the restoration of the impact resistance of the polycarbonate resin obtained by blending the recovered polycarbonate resin.

In addition, the flame-retardant resin composition disclosed in Patent Document 2 has a polydiorganosiloxane content of at most 0.6 wt%, and hence it cannot be said that the restoration of its impact resistance is sufficient.

CITATION LIST

PATENT DOCUMENT

Patent Document 1: JP 2011-131507 A

Patent Document 2: JP 2014-105276 A

SUMMARY OF INVENTION

TECHNICAL PROBLEM

In the case where recycled materials of molded articles each formed of a polycarbonate resin composition are used, even when the recycled materials are identical to each other in composition, a large difference in impact resistance occurs therebetween depending on the degree of deterioration of a polycarbonate resin. As the deterioration of the polycarbonate resin advances, the molecular cleavage of the resin occurs to cause a reduction in molecular weight and to increase a ratio of terminal hydroxyl groups in the resin. A molded article using a recycled material whose deterioration has advanced has a drawback in that the molded article is poor in impact resistance.

An object of the present invention is to significantly restore reduced impact resistance when a recycled material poor in impact resistance is used as part of raw materials.

SOLUTION TO PROBLEM

The inventor of the present invention has found that while the degree to which impact resistance is restored is small even when a recycled material poor in impact resistance is mixed with a polycarbonate resin free of any polyorganosiloxane block, the impact resistance is largely restored by mixing the recycled material with a polycarbonate-polyorganosiloxane copolymer, and setting a polyorganosiloxane block content to an amount equal to or more than a specific value.

That is, the present invention relates to the following items [1] to [10].

[1] A polycarbonate-based resin composition, comprising a polycarbonate-based resin composition (A) comprising: 90 mass% to 10 mass% of a polycarbonate-polyorganosiloxane copolymer (A-1) having a polycarbonate block containing a repeating unit represented by the following general formula (I), and a polyorganosiloxane block containing a siloxane repeating unit represented by the following general formula (II) ; and 10 mass% to 90 mass% of a recycled material (A-2) containing a polycarbonate-based resin, wherein a content of a polyorganosiloxane block moiety in the polycarbonate-based resin composition is from 0.7 mass% to 40 mass%:

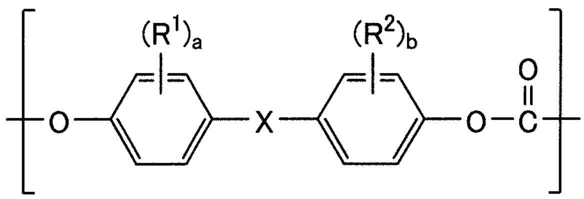
(I)

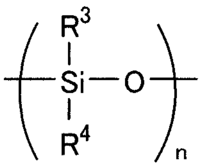
(II)

wherein:

$R^1$ and $R^2$ each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O-, or -CO-, and a and b each independently represent an integer of from 0 to 4; and
$R^3$ and $R^4$ each independently represent a hydrogen atom, a halogen atom, an alkyl group having 1 to 6 carbon atoms, an alkoxy group having 1 to 6 carbon atoms, or an aryl group having 6 to 12 carbon atoms, and an average number n of repetitions represents a total number of siloxane repeating units in the polyorganosiloxane block.

[2] The polycarbonate-based resin composition according to Item [1], wherein a ratio of terminal hydroxyl groups in the polycarbonate-based resin composition is from 5 mol% to 70 mol%.
[3] The polycarbonate-based resin composition according to Item [1] or [2], wherein a ratio of terminal hydroxyl groups in the component (A-2) is from 7 mol% to 70 mol%.
[4] The polycarbonate-based resin composition according to any one of Items [1] to [3], wherein a ratio of terminal hydroxyl groups in the copolymer (A-1) is less than 5 mol%.
[5] The polycarbonate-based resin composition according to any one of Items [1] to [4], wherein n in the general formula (II) represents from 20 to 500.
[6] The polycarbonate-based resin composition according to any one of Items [1] to [5], wherein the polyorganosiloxane block containing the siloxane repeating unit represented by the general formula (II) is represented by the following general formula (II') or the following general formula (II"):

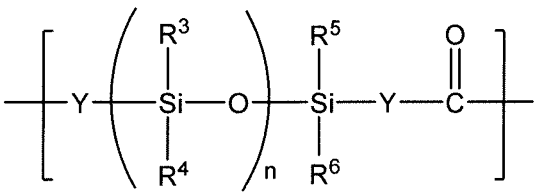

( II' )

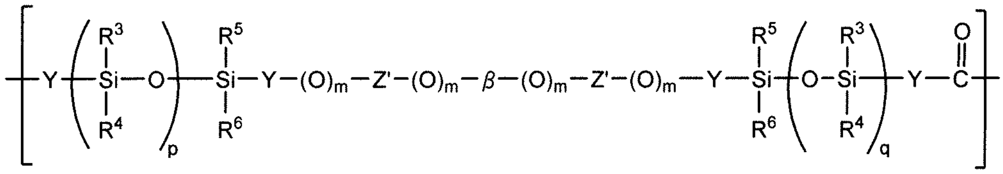

(II'')

wherein
$R^3$ to $R^6$ each independently represent a hydrogen atom, a halogen atom, an alkyl group having 1 to 6 carbon atoms, an alkoxy group having 1 to 6 carbon atoms, or an aryl group having 6 to 12 carbon atoms, Y represents a single bond, or a divalent organic residue containing -C(=O)-, an aliphatic group, or an aromatic group, n represents an average number of repetitions, Z' represents a single bond, $-R^7O-$, $-R^7COO-$, $-R^7NH-$, -COO-, or -S-, and the $R^7$ represents a linear, branched, or cyclic alkylene group, an aryl-substituted alkylene group that may have an alkoxy group on an aromatic ring thereof, an arylene group, or a diarylene group, β represents a divalent group derived from a diisocyanate compound or a divalent group derived from a dicarboxylic acid, m represents 0 or 1, and a sum of p and q is equal to n, and represents an average number of repetitions.

[7] The polycarbonate-based resin composition according to any one of Items [1] to [6], wherein a content of the polyorganosiloxane block moiety in the copolymer (A-1) is from 1.0 mass% to 50 mass%.

[8] The polycarbonate-based resin composition according to any one of Items [1] to [7], wherein a viscosity-average molecular weight of the copolymer (A-1) is from 10,000 to 30,000.

[9] A pellet, comprising the polycarbonate-based resin composition of any one of Items [1] to [8].

[10] A molded article, comprising the polycarbonate-based resin composition of any one of Items [1] to [8].

ADVANTAGEOUS EFFECTS OF INVENTION

According to the present invention, even when a recycled material poor in impact resistance is used, reduced impact resistance can be significantly restored by mixing the recycled material with a polycarbonate-polyorganosiloxane copolymer to provide a polycarbonate-based resin composition in which a polyorganosiloxane block content is set to be equal to or more than a specific value.

DESCRIPTION OF EMBODIMENTS

A polycarbonate-based resin composition of the present invention is described in detail below. A provision considered to be preferred in this description can be arbitrarily adopted, and a combination of preferredprovisions can be said to be more preferred.

<First Component: Polycarbonate-polyorganosiloxane Copolymer (A-1)>

A polycarbonate-polyorganosiloxane copolymer (hereinafter, the polycarbonate-polyorganosiloxane copolymer is sometimes abbreviated as "PC-POS copolymer," and a polyorganosiloxane is sometimes abbreviated as "POS") serving as a component (A-1), which is a first component, contains a polycarbonate block whose main chain contains a repeating unit represented by the general formula (I) and a polyorganosiloxane block containing a siloxane repeating unit represented by the general formula (II).

The ratio of terminal hydroxyl groups of the PC-POS copolymer as the component (A-1) is preferably less than 5 mol%.

One of the PC-POS copolymers (A-1) may be used alone, or two or more thereof may be used in combination.

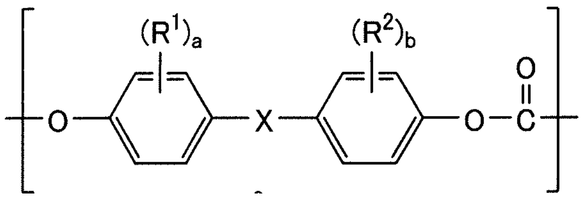

(I)

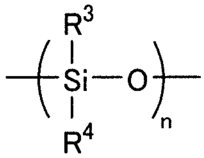

(II)

In the formulae, $R^1$ and $R^2$ each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O-, or -CO-, and a and b each independently represent an integer of from 0 to 4.

$R^3$ and $R^4$ each independently represent ahydrogenatom, ahalogen atom, an alkyl group having 1 to 6 carbon atoms, an alkoxy group having 1 to 6 carbon atoms, or an aryl group having 6 to 12 carbon atoms, and the average number n of repetitions represents the total number of siloxane repeating units in the polyorganosiloxane block.

Examples of the halogen atom that $R^1$ and $R^2$ in the general formula (I) each independently represent include a fluorine atom, a chlorine atom, a bromine atom, and an iodine atom.

Examples of the alkyl group that $R^1$ and $R^2$ each independently represent include a methyl group, an ethyl group, a n-propyl group, an isopropyl group, various butyl groups ("various" means that a linear group and any branched group are included, and the same applies hereinafter), various pentyl groups, and various hexyl groups. An example of the alkoxy group that $R^1$ and $R^2$ each independently represent is an alkoxy group whose alkyl group moiety is the alkyl group described above.

$R^1$ and $R^2$ each preferably represent an alkyl group having 1 to 4 carbon atoms or an alkoxy group having 1 to 4 carbon atoms.

Examples of the alkylene group represented by X include a methylene group, an ethylene group, a trimethylene group, a tetramethylene group, and a hexamethylene group, and an alkylene group having 1 to 5 carbon atoms is preferred. Examples of the alkylidene group represented by X include an ethylidene group and an isopropylidene group. The cycloalkylene group represented by X is preferably a cycloalkylene group having 5 to 10 carbon atoms, and examples thereof include a cyclopentanediyl group, a cyclohexanediyl group, and a cyclooctanediyl group. Examples of the cycloalkylidene group represented by X include a cyclohexylidene group, a 3,5,5-trimethylcyclohexylidene group, and a 2-adamantylidene group, a cycloalkylidene group having 5 to 10 carbon atoms is preferred, and a cycloalkylidene group having 5 to 8 carbon atoms is more preferred. As an aryl moiety of the arylalkylene group represented by X, for example, aryl groups each having 6 to 14 ring-forming carbon atoms, such as a phenyl group, a naphthyl group, a biphenyl group, and an anthryl group are exemplified. As an aryl moiety of the arylalkylidene group represented by X, for example, aryl groups each having 6 to 14 ring-forming carbon atoms, such as a phenyl group, a naphthyl group, a biphenyl group, and an anthryl group are exemplified.

a and b each independently represent an integer of from 0 to 4, preferably from 0 to 2, more preferably 0 or 1.

Examples of the halogen atom that $R^3$ and $R^4$ in the general formula (II) each independently represent include a fluorine atom, a chlorine atom, a bromine atom, and an iodine atom. Examples of the alkyl group or alkoxy group that $R^3$ and $R^4$ each independently represent include the same examples as those in the case of $R^1$ and $R^2$. Examples of the aryl group that $R^3$ and $R^4$ each independently represent include a phenyl group and a naphthyl group.

$R^3$ and $R^4$ each preferably represent a hydrogen atom, an alkyl group having 1 to 6 carbon atoms, an alkoxy group having 1 to 6 carbon atoms, or an aryl group having 6 to 12 carbon atoms, and each more preferably represent a methyl group.

n in the general formula (II) is an average number of repetitions, and represents the total number of siloxane repeating units in the polyorganosiloxane block.

In the present invention, n typically represents from 20 to 500, preferably represents from 50 to 400, and more preferably represents from 70 to 300. When n represents 20 or more, an excellent impact resistance can be obtained and significant restoration of the impact resistance also can be achieved. When n represents 500 or less, handleability

at the time of the production of the PC-POS copolymer becomes excellent.

The average number n of repetitions can be calculated by $^1$H-NMR.

In the present invention, the content of the polyorganosiloxane block (II) in the polycarbonate-based resin composition is from 0.7 mass% to 40 mass%, preferably from 1.0 mass% to 30 mass%, more preferably from 1.5 mass% to 20 mass%. When the content of the polyorganosiloxane block is 0.7 mass% or more, an excellent impact resistance can be obtained and significant restoration of the impact resistance also can be achieved. When the content of the polyorganosiloxane block is 40 mass% or less, the handleability at the time of the production of the PC-POS copolymer becomes excellent.

In the present invention, the content of the polyorganosiloxane block (II) moiety in the PC-POS copolymer (A-1) is typically from 1.0 mass% to 50 mass%, preferably from 2.0 mass% to 40 mass%, more preferably from 3.0 mass% to 30 mass%. When the content of the polyorganosiloxane block is 1.0 mass% or more, an excellent impact resistance can be obtained and significant restoration of the impact resistance also can be achieved. When the content of the polyorganosiloxane block is 50 mass% or less, the handleability at the time of the production of the PC-POS copolymer becomes excellent.

In addition, the viscosity-average molecular weight (Mv) of the PC-POS copolymer (A-1) is typically from 10,000 to 30,000, preferably from 12,000 to 28,000, more preferably from 15,000 to 25,000. When the viscosity-average molecular weight of the component (A-1) falls within the range, it becomes easy to achieve a balance between the flowability and impact resistance of the composition.

In the present invention, the viscosity-average molecular weight (Mv) is a value calculated from Schnell's equation ($[\eta] = 1.23 \times 10^{-5} \times Mv^{0.83}$) through the measurement of the limiting viscosity [η] of a methylene chloride solution at 20°C with an Ubbelohde-type viscosity tube.

The structure of the polyorganosiloxane block containing the siloxane repeating unit represented by the general formula (II) is preferably a structure represented by the following general formula (II').

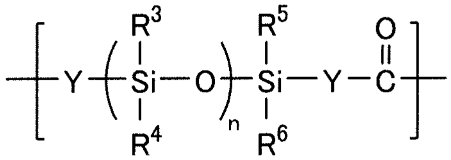

(II')

In the formula (II'), $R^3$ to $R^6$ each independently represent a hydrogen atom, a halogen atom, an alkyl group having 1 to 6 carbon atoms, an alkoxy group having 1 to 6 carbon atoms, or an aryl group having 6 to 12 carbon atoms, Y represents a single bond, or a divalent organic residue containing -C(=O)-, an aliphatic group, or an aromatic group, and n represents an average number of repetitions.

$R^3$ to $R^6$ each preferably represent a hydrogen atom, an alkyl group having 1 to 6 carbon atoms, an alkoxy group having 1 to 6 carbon atoms, or an aryl group having 6 to 12 carbon atoms. Y preferably represents a residue of a phenol-based compound having an alkyl group, and more preferably represents an organic residue derived from allylphenol or an organic residue derived from eugenol.

It is also preferred that the structure of the polyorganosiloxane block containing the siloxane repeating unit represented by the general formula (II) be a structure represented by the following formula (II").

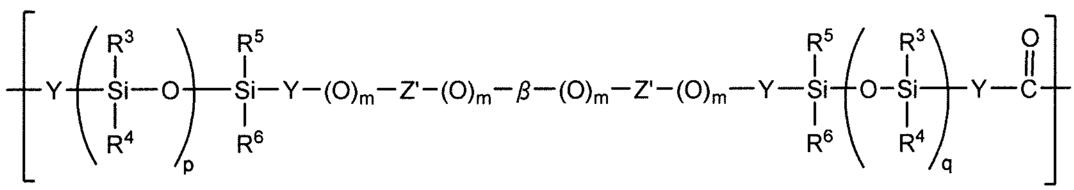

(II")

In the formula (II"), $R^3$ to $R^6$ and Y are the same as those in the general formula (II'), and preferred examples thereof are also the same. The sum of p and q is equal to n, and represents the above-mentioned average number n of repetitions. Each of p and q is preferably equal to n/2.

m represents 0 or 1.

Z' represents a single bond, $-R^7O-$, $-R^7COO-$, $-R^7NH-$, -COO-, or -S-, and the $R^7$ represents a linear, branched, or cyclic alkylene group, an aryl-substituted alkylene group that may have an alkoxy group on an aromatic ring thereof, an arylene group, or a diarylene group. Specific examples of the $R^7$ are described later.

β represents a divalent group derived from a diisocyanate compound or a divalent group derived from a dicarboxylic acid. Specific examples of the divalent group derived from a diisocyanate compound and the divalent group

derived from a dicarboxylic acid are described later.

A method of producing the PC-POS copolymer (A-1) is not particularly limited, and the PC-POS copolymer canbe easilyproduced with reference to a known production method for a PC-POS copolymer, such as a method described in JP 2010-241943 A.

Specifically, the PC-POS copolymer can be produced by: dissolving a polycarbonate oligomer produced in advance and a polyorganosiloxane having a reactive group at a terminal thereof (such as a polyorganosiloxane represented by the following general formula (2) or (3)) in a water-insoluble organic solvent (such as methylene chloride); adding an aqueous alkaline compound solution (such as aqueous sodium hydroxide) of a dihydric phenol represented by the following general formula (1) (such as bisphenol A) to the solution; and subjecting the mixture to an interfacial polycondensation reaction in the presence of a polymerization catalyst such as tertiary amine (such as triethylamine) or a quaternary ammonium salt (such as trimethylbenzylammonium chloride), and a molecular weight modifier (terminal stopper) (a monohydric phenol such as *p*-*t*-butylphenol). The content of the polyorganosiloxane block containing the siloxane repeating unit represented by the general formula (II) in the PC-POS copolymer component (A-1) can be adjusted by, for example, adjusting the usage amount of the polyorganosiloxane.

After the interfacial polycondensation reaction, the resultant is appropriately left at rest to be separated into an aqueous phase and a water-insoluble organic solvent phase [separating step], the water-insoluble organic solvent phase is washed (preferably washed with a basic aqueous solution, an acidic aqueous solution and water, in order) [washing step], and the resultant organic phase is concentrated [concentrating step], pulverized [pulverizing step], and dried [drying step]. Thus, the PC-POS copolymer can be obtained.

In addition, the PC-POS copolymer can be produced by copolymerizing a dihydric phenol represented by the following general formula (1), a polyorganosiloxane represented by the following general formula (2), and phosgene, a carbonate, or a chloroformate.

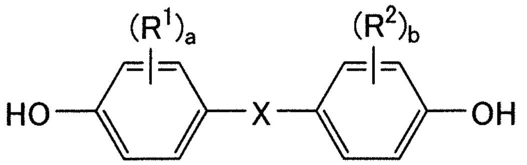

(1)

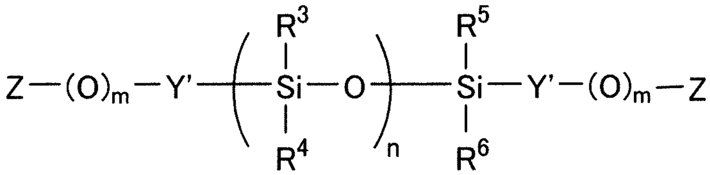

(2)

In the general formula (1), $R^1$ and $R^2$, X, a and b are the same as those in the general formula (I), and in the general formula (2), $R^3$ to $R^6$ are the same as those in the general formula (II'), n is the same as that in the general formula (II), and Y' is the same as Y in the general formula (II').

m represents 0 or 1, Z represents a halogen atom, $-R^7OH$, $-R^7COOH$, $-R^7NH_2$, $-R^7NHR^8$, -COOH, or -SH, $R^7$ represents a linear, branched, or cyclic alkylene group, an aryl-substituted alkylene group that may have an alkoxy group on an aromatic ring thereof, an arylene group, or a diarylene group, and $R^8$ represents an alkyl group, an alkenyl group, an aryl group, an aralkyl group, or an alkoxy group.

The diarylene group refers to a group obtained by linking two arylene groups directly or through a divalent organic group, and is specifically a group having a structure represented by $-Ar^1-W-Ar^2-$. Here, $Ar^1$ and $Ar^2$ each represent an arylene group, and W represents a single bond or a divalent organic group. Specific examples and suitable examples of W are the same as those of X in the general formula (I).

The linear or branched alkylene group represented by $R^7$ is, for example, an alkylene group having 1 to 8, preferably 1 to 5 carbon atoms, and the cyclic alkylene group represented by $R^7$ is, for example, a cycloalkylene group having 5 to 15, preferably 5 to 10 carbon atoms. The alkylene moiety of the aryl-substituted alkylene group represented by $R^7$ is, for example, an alkylene group having 1 to 8, preferably 1 to 5 carbon atoms. The aryl moiety of the aryl - substituted alkylene group represented by $R^7$ is, for example, an aryl group having 6 to 14 ring-forming carbon atoms, such as a phenyl group, a naphthyl group, a biphenyl group, or an anthryl group. The arylene group represented by any one of $R^7$, $Ar^1$, and $Ar^2$ is, for example, an arylene group having 6 to 14 ring-forming carbon atoms, such as a phenylene group, a naphthylene group, a biphenylene group, or an anthrylene group.

Y' preferably represents a single bond, or a divalent organic residue containing -C (=O) -, analiphatic group, or an aromatic group, the organic residue being bonded to Si and O or to Si and Z. $R^3$ to $R^6$ each preferably represent

a hydrogen atom, an alkyl group having 1 to 6 carbon atoms, an alkoxy group having 1 to 6 carbon atoms, or an aryl group having 6 to 12 carbon atoms. n is the same as that described above, and m represents 0 or 1.

Z preferably represents $-R^7OH$, $-R^7COOH$, $-R^7NH_2$, -COOH, or -SH. $R^7$ is as defined above, and preferred examples thereof are also the same as those described above.

$R^8$ preferably represents an alkyl group, an alkenyl group, an aryl group, or an aralkyl group.

The dihydric phenol represented by the general formula (1) serving as a rawmaterial for the PC-POS copolymer is not particularly limited, but is suitably 2,2-bis(4-hydroxyphenyl)propane [trivial name: bisphenol A]. When bisphenol A is used as the dihydric phenol, in the resultant PC-POS, X represents an isopropylidene group and a=b=0 in the general formula (I).

Examples of the dihydric phenol except bisphenol A include: bis(hydroxyaryl)alkanes, such as bis(4-hydroxyphenyl)methane, 1,1-bis(4-hydroxyphenyl)ethane, 2,2-bis(4-hydroxyphenyl)butane, 2,2-bis(4-hydroxyphenyl)octane, bis(4-hydroxyphenyl)phenylmethane, bis(4-hydroxyphenyl)diphenylmethane, 2,2-bis(4-hydroxy-3-methylphenyl)propane, bis(4-hydroxyphenyl)naphthylmethane, 1,1-bis(4-hydroxy-3-*t*-butylphenyl)propane, 2,2-bis(4-hydroxy-3-bromophenyl)propane, 2,2-bis(4-hydroxy-3,5-dimethylphenyl)propane, 2,2-bis(4-hydroxy-3-chlorophenyl)propane, 2,2-bis(4-hydroxy-3,5-dichlorophenyl)propane, and 2,2-bis(4-hydroxy-3,5-dibromophenyl)propane; bis(hydroxyaryl)cycloalkanes, such as 1,1-bis(4-hydroxyphenyl)cyclopentane, 1,1-bis(4-hydroxyphenyl)cyclohexane, 1,1-bis(4-hydroxyphenyl)-3,5,5-trimethylcyclohexane, 2,2-bis(4-hydroxyphenyl)norbornane, and 1,1-bis(4-hydroxyphenyl)cyclododecane; dihydroxyaryl ethers, such as 4,4'-dihydroxydiphenyl ether and 4,4'-dihydroxy-3,3'-dimethyldiphenyl ether; dihydroxydiaryl sulfides, such as 4,4'-dihydroxydiphenyl sulfide and 4,4'-dihydroxy-3,3'-dimethyldiphenyl sulfide; dihydroxydiaryl sulfoxides, such as 4,4'-dihydroxydiphenyl sulfoxide and 4,4'-dihydroxy-3,3'-dimethyldiphenyl sulfoxide; dihydroxydiaryl sulfones, such as 4,4'-dihydroxydiphenyl sulfone and 4,4'-dihydroxy-3,3'-dimethyldiphenyl sulfone; dihydroxydiphenyls, such as 4,4'-dihydroxydiphenyl; dihydroxydiarylfluorenes, such as 9,9-bis(4-hydroxyphenyl)fluorene and 9,9-bis(4-hydroxy-3-methylphenyl)fluorene; dihydroxydiaryladamantanes, such as 1,3-bis(4-hydroxyphenyl)adamantane, 2,2-bis(4-hydroxyphenyl)adamantane, and 1,3-bis(4-hydroxyphenyl)-5,7-dimethyladamantane; 4,4'-[1,3-phenylenebis(1-methylethylidene)]bisphenol; 10,10-bis(4-hydroxyphenyl)-9-anthrone; and 1,5-bis(4-hydroxyphenylthio)-2,3-dioxapentane.

One of those dihydric phenols may be used alone, or two or more thereof may be used as a mixture.

The polyorganosiloxane represented by the general formula (2) can be easily produced by subj ecting a phenol having an olefinically unsaturated carbon-carbon bond (preferably vinylphenol, allylphenol, eugenol, isopropenylphenol, or the like), to a hydrosilylation reaction with a terminal of a polyorganosiloxane chain having a predetermined polymerization degree (n; number of repetitions). The phenol is more preferably allylphenol or eugenol.

The polyorganosiloxane represented by the general formula (2) is preferably one in which $R^3$ to $R^6$ each represent a methyl group.

Examples of the polyorganosiloxane represented by the general formula (2) include compounds represented by the following general formulae (2-1) to (2-10).

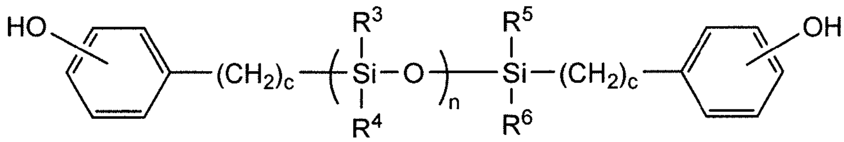

(2-1)

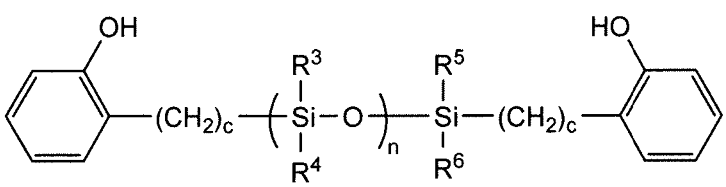

(2-2)

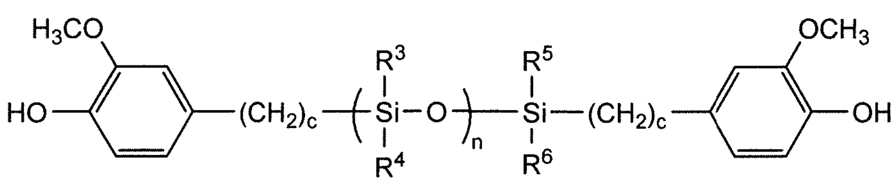

(2-3)

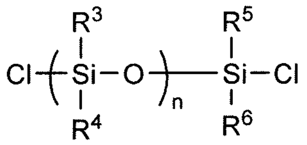

(2-4)

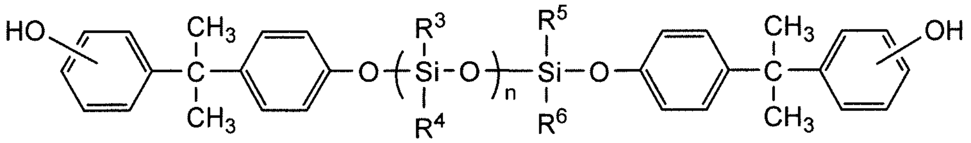

(2-5)

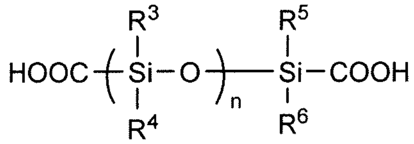

(2-6)

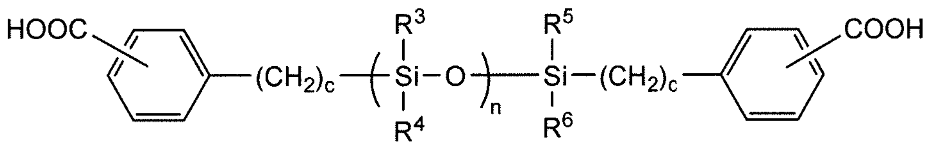

(2-7)

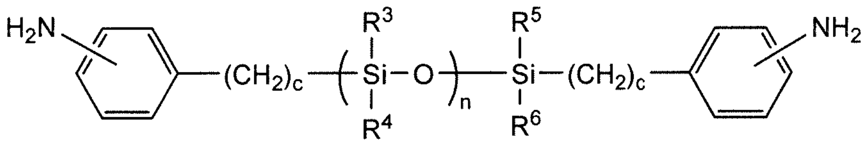

(2-8)

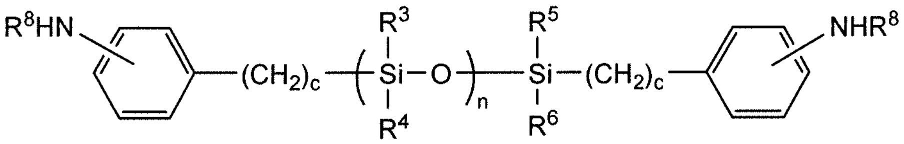

(2-9)

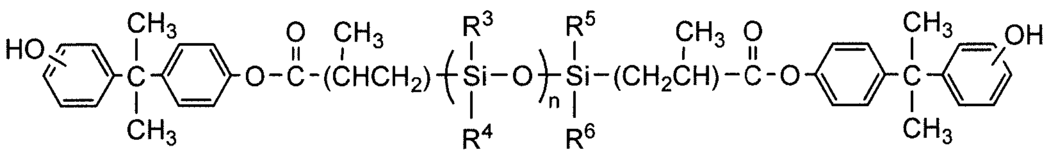

(2-10)

In the general formulae (2-1) to (2-10), $R^3$ to $R^6$, n, and $R^8$ are as defined above, and preferred examples thereof are also the same as those described above. c represents a positive integer and typically represents an integer of from 1 to 6.

Among them, a phenol-modified polyorganosiloxane represented by the general formula (2-1) is preferred from the viewpoint of its ease of polymerization. In addition, an $\alpha,\omega$-bis[3-(*o*-hydroxyphenyl)propyl]polydimethylsiloxane, which is one of compound represented by the general formula (2-2), or an $\alpha,\omega$-bis[3-(4-hydroxy-3-methoxyphenyl)propyl]polydimethylsiloxa ne, which is one of compound represented by the general formula (2-3), is preferred from the viewpoint of its ease of availability.

The phenol-modified polyorganosiloxane can be produced by a known method. For example, the following method is given as the production method.

First, cyclotrisiloxane and disiloxane are caused to react with each other in the presence of an acid catalyst to synthesize an $\alpha,\omega$-dihydrogen polyorganosiloxane. At this time, an $\alpha,\omega$-dihydrogen polyorganosiloxane having a desired average number of repetitions can be synthesized by changing a blending ratio between cyclotrisiloxane and disiloxane. Then, the $\alpha,\omega$-dihydrogen polyorganosiloxane is subj ected to an addition reaction with a phenol compound having an unsaturated aliphatic hydrocarbon group, such as allylphenol or eugenol, in the presence of a catalyst for a hydrosilylation reaction. Thus, a phenol-modified polyorganosiloxane having a desired average number of repetitions can be produced.

At this stage, a cyclic polyorganosiloxane having a low molecular weight and an excessive amount of the phenol compound remain as impurities. Accordingly, those low-molecular weight compounds are preferably removed by distillation with heating under reduced pressure.

Further, the PC-POS may be a copolymer produced by copolymerizing the dihydric phenol represented by the general formula (1), a polyorganosiloxane represented by the following general formula (3), and phosgene, a carbonate, or a chloroformate. The polyorganosiloxane represented by the general formula (3) is a product of a reaction between the polyorganosiloxane represented by the general formula (2) and a diisocyanate compound or a dicarboxylic acid.

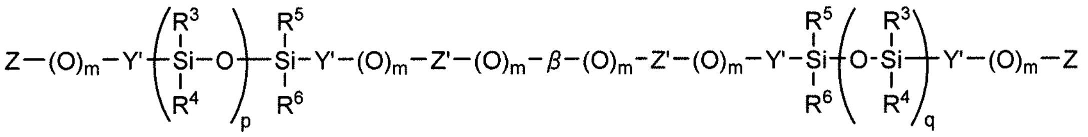 (3)

In the general formula (3), $R^3$ to $R^6$, m, p, q, Y', Z, and Z' are as defined above, and preferred examples thereof are also the same as those described above. With regard to p and q in the general formula (3), a polyorganosiloxane in which p=q, i.e., p=n/2 and q=n/2 can be given as a preferred example.

In addition, β represents a divalent group derived from a diisocyanate compound or a divalent group derived from a dicarboxylic acid, and examples thereof include divalent groups represented by the following general formulae (4-1) to (4-5).

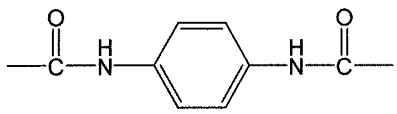 (4-1)

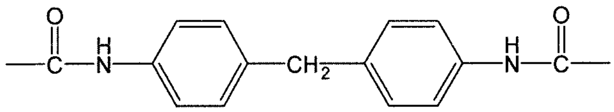 (4-2)

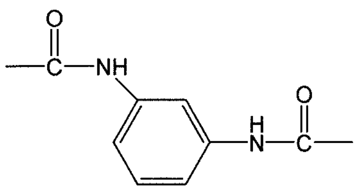 (4-3)

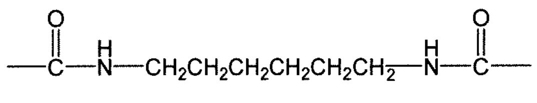 (4-4)

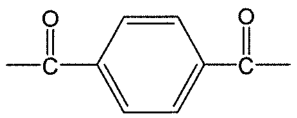 (4-5)

<Second Component: Polycarbonate-based Recycled Material (A-2)>

The polycarbonate-based resin composition of the present invention comprises 90 mass% to 10 mass% of the polycarbonate-polyorganosiloxane copolymer (A-1), and 10 mass% to 90 mass% of a recycled material (A-2) containing a polycarbonate-based resin.

The recycled material containing the polycarbonate-based resin that can be used in the present invention refers to a pulverized product of a molded article containing the polycarbonate-based resin, or of a sprue or a runner produced at the time of the molding of the resin, and a pellet produced from the pulverized product with an extruder.

The recycled material (A-2) containing the polycarbonate-based resin of the present invention may have a ratio of terminal hydroxyl groups serving as a degree of its deterioration of from 7 mol% to 70 mol%. Here, the term "ratio of terminal hydroxyl groups" refers to the ratio of a hydroxyl group (OH group) at a terminal of the polycarbonate-based

resin. For example, when the polycarbonate-based resin in the recycled material (A-2) has a *tert*-butylphenol terminal group as described later, the total of the mol% of the *tert*-butylphenol terminal group and the mol% of a OH group at a terminal of the polycarbonate-based resin is 100 mol%. The ratio of terminal hydroxyl groups can be determined by, for example, nuclear magnetic resonance (NMR).

The recycled material whose deterioration has advanced as described above has a drawback in that when the recycled material is turned into a molded article, the molded article is poor in impact resistance. Here, even when a normal polycarbonate-based resin that has not deteriorated is added for compensating the impact resistance reduced by the use of the recycled material, the degree to which the impact resistance is restored is small. The inventor of the present invention has found that when a polycarbonate-polyorganosiloxane copolymer having impact resistance substantially equal to that of the normal polycarbonate-based resin that has not deteriorated is added to the recycled material in contrast to the foregoing, surprisingly, the restoration ratio of the impact resistance is high.

The ratio of terminal hydroxyl groups of the entirety of the polycarbonate-based resin composition formed of the polycarbonate-polyorganosiloxane copolymer (A-1) and the recycled material (A-2) of the present invention is preferably from 5 mol% to 70 mol%.

The main chain of the polycarbonate-based resin in the recycled material (A-2) has a repeating unit represented by the following general formula (III). The polycarbonate-based resin is not particularly limited, and various known polycarbonate-based resins can be used.

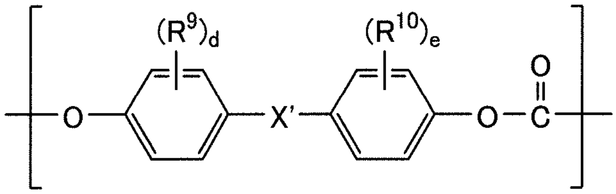

(III)

In the formula, $R^9$ and $R^{10}$ each independently represent a halogen atom, an alkyl group having 1 to 6 carbon atoms, or an alkoxy group having 1 to 6 carbon atoms, X' represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, -S-, -SO-, $-SO_2-$, -O-, or -CO-, and d and e each independently represent an integer of from 0 to 4.

Specific examples of $R^9$ and $R^{10}$ include the same examples as those of $R^1$ and $R^2$, and preferred examples thereof are also the same as those of $R^1$ and $R^2$. $R^9$ and $R^{10}$ each more preferably represent an alkyl group having 1 to 6 carbon atoms or an alkoxy group having 1 to 6 carbon atoms. Specif ic examples of X' include the same examples as those of X, and preferred examples thereof are also the same as those of X. d and e each independently represent preferably from 0 to 2, more preferably 0 or 1.

In particular, a resin obtained by a conventional production method for a polycarbonate can be used as the polycarbonate-based resin. Examples of the conventional method include: an interfacial polymerization method involving causing an aromatic dihydric phenol-based compound and phosgene to react with each other in the presence of an organic solvent inert to the reaction and an aqueous alkaline solution, adding a polymerization catalyst, such as a tertiary amine or a quaternary ammonium salt, to the resultant, and polymerizing the mixture; and a pyridine method involving dissolving the dihydric phenol-based compound in pyridine or a solution mixture of pyridine and an inert solvent, and introducing phosgene to the solution to directly produce the resin.

A molecular weight modifier (terminal stopper), a branching agent, or the like is used as required at the time of the reaction.

The dihydric phenol -based compound is, for example, a compound represented by the following general formula (III').

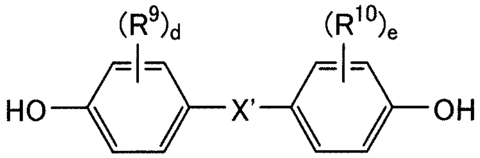

(III')

In the formula, $R^9$, $R^{10}$, X', d, and e are as defined above, and preferred examples thereof are also the same as those described above.

Specific examples of the dihydric phenol-based compound include bis(hydroxyphenyl)alkanes, such as 2,2-bis(4-hydroxyphenyl)propane [bisphenol A], bis(4-hydroxyphenyl)methane, 1,1-bis(4-hydroxyphenyl)ethane, and 2,2-bis(4-hydroxy-3,5-dimethylphenyl)propane, 4,4'-dihydroxydiphenyl, a bis(4-hydroxyphenyl)cycloalkane, bis(4-hydroxyphenyl) oxide, bis(4-hydroxyphenyl) sulfide, bis(4-hydroxyphenyl) sulfone, bis(4-hydroxyphenyl) sulfoxide, and bis(4-hydroxyphenyl) ketone.

Among them, bis(hydroxyphenyl)alkanes are preferred, and bisphenol A is more preferred.

One of the polycarbonate-based resins may be used alone, or two or more thereof may be used in combination.

The polycarbonate-based resin in the recycled material may be a polycarbonate-polyorganosiloxane copolymer, and examples thereof may include the same examples as those of the (A-1) except that the copolymer is recycled. That is, the copolymer has a polycarbonate block containing a repeating unit represented by the following general formula (I) and a polyorganosiloxane block containing a siloxane repeating unit represented by the following general formula (II).

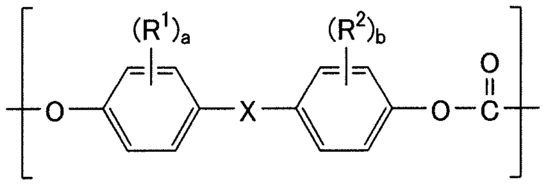

( I )

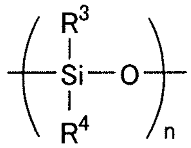

( II )

In the formulae, $R^1$, $R^2$, $R^3$, $R^4$, X, a, b, and n are as described above, and preferred ranges thereof are also the same as those described above. In addition, a preferred structure of the polyorganosiloxane block containing a siloxane repeating unit represented by the general formula (II) is also as described above.

In addition, the polycarbonate-based resin component in the recycled material (A-2) of the present invention may be blended with any other thermoplastic resin, such as a styrene-based resin.

The styrene-based resin is used for the purpose of improving the moldability of a polycarbonate-based resin, and each of an amorphous styrene-based resin and a crystalline styrene-based resin can be used.

The amorphous styrene-based resin is, for example, a polymer free of any crystal structure obtained by polymerizing a monomer or monomer mixture formed of 20 mass% to 100 mass% of a monovinylic aromatic monomer, such as styrene or α-methylstyrene, 0 mass% to 60 mass% of a vinyl cyanide-based monomer, such as acrylonitrile or methacrylonitrile, and 0 mass% to 50 mass% of any other vinylic monomer copolymerizable with these monomers, such as maleimide or methyl (meth)acrylate.

Examples of the polymer include a general-purpose polystyrene (GPPS) and an acrylonitrile-styrene copolymer (AS resin).

A rubber-modified styrene-based resin reinforced with a rubber polymer may be preferably utilized as the amorphous styrene-based resin. Examples of the rubber-modified styrene-based resin include: high-impact polystyrene (HIPS) obtained by polymerizing styrene with a rubber, such as polybutadiene; an acrylonitrile-butadiene-styrene copolymer (ABS resin) obtained by polymerizing acrylonitrile and styrene with polybutadiene; and a methyl methacrylate-butadiene-styrene copolymer (MBS resin) obtained by polymerizing methyl methacrylate and styrene with polybutadiene. Two or more of the rubber-modified styrene-based resins may be used in combination, and may also be used as a mixture with the rubber-unmodified amorphous styrene-based resin.

The content of the rubber in the rubber-modified styrene-based resin is, for example, from 2 mass% to 50 mass%, preferably from 5 mass% to 30 mass%, particularly preferably from 5 mass% to 15 mass%. When the ratio of the rubber is less than 2 mass%, the impact resistance of the composition becomes insufficient, and when the ratio is more than 50 mass%, the thermal stability thereof may reduce, or a problem, such as a reduction in melt flowability thereof, the occurrence of gel, or the coloring thereof, may occur.

Specific examples of the rubber include polybutadiene, a rubbery polymer containing acrylate and/or methacrylate, a styrene-butadiene-styrene rubber (SBS), a styrene-butadiene rubber (SBR), a butadiene-acrylic rubber, an isoprene rubber, an isoprene-styrene rubber, an isoprene-acrylic rubber, and an ethylene-propylene rubber. Among them, polybutadiene is particularly preferred. Any one of a low cis polybutadiene (for example, containing 1 mol% to 30 mol% of a 1,2-vinyl bond and 30 mol% to 42 mol% of a 1,4-cis bond) or a high cis polybutadiene (for example, containing 20 mol% or less of a 1, 2-vinyl bond and 78 mol% or more of a 1,4-cis bond) may be used as the polybutadiene to be usedherein. Inaddition, the polybutadiene maybe a mixture thereof.

In addition, the crystalline styrene-based resin is, for example, a styrene-based (co)polymer having a syndiotactic

structure or an isotactic structure. However, in the present invention, the amorphous styrene-based resin is preferably used for the purpose of further improving the flowability of the composition. Further, a resin having a melt flow rate (MFR) at 200°C and a load of 5 kg of preferably from 0.5 to 100, more preferably from 2 to 80, still more preferably from 2 to 50 out of the amorphous styrene-based resins is used. When the melt flow rate (MFR) is 0.5 or more, sufficient flowability is obtained, and when the melt flow rate is 100 or less, the impact resistance of the flame-retardant polycarbonate-based resin composition becomes satisfactory.

Further, among the amorphous styrene-based resins, a high-impact polystyrene resin (HIPS), an acrylonitrile-styrene copolymer (AS resin), anacrylonitrile-butadiene-styrenecopolymer (ABS resin), a methyl methacrylate-styrene copolymer (MS resin), a methyl methacrylate-butadiene-styrene copolymer (MBS resin), an acrylonitrile-methyl acrylate-styrene copolymer (AAS resin), and an acrylonitrile-(ethylene/propylene/diene copolymer)-styrene copolymer (AES resin) are preferred, and a high-impact polystyrene resin (HIPS), an acrylonitrile-styrene copolymer (AS resin), and an acrylonitrile-butadiene-styrene copolymer (ABS resin) are particularly preferred.

Particularly preferred examples thereof may include: as the AS resin, 290FF (manufactured by Techno Polymer Co., Ltd.), S100N (manufactured by UMG ABS, Ltd.), S101 (manufactured by UMG ABS, Ltd.), and PN-117C (manufactured by Chi Mei Corporation); and as the ABS resin, SANTAC AT-05 and SXH-330 (each of which is manufactured by Nippon A&L Inc.), TOYOLAC 500 and 700 (manufactured by Toray Industries, Inc.), and PA-756 (manufactured by Chi Mei Corp.). An example of the HIPS may be IT43 (manufactured by Petrochemicals (Malaysia) Sdn Bhd.).

In addition to the polycarbonate-polyorganosiloxane copolymer (A-1) and the recycled material (A-2) containing the polycarbonate-based resin, the polycarbonate-based resin composition of the present invention may further contain a virgin material (B) of the recycled material (A-2).

<Other Additive>

Any other component can appropriately be incorporated into the polycarbonate-based resin composition of the present invention to the extent that the effects of the present invention are not remarkably impaired.

Examples of the other component include additives, such as a flame retardant, a flame retardant aid, an inorganic filler, a UV absorber, a release agent, and colorants (a dye and a pigment).

The flame retardant is not particularly limited as long as the flame retardant has an improving effect on the flame retardancy of the composition within the range of the effects of the present invention, and suitable examples thereof include various known flame retardants, such as a halogen-based flame retardant, a phosphorus-based flame retardant, and a metal salt-based flame retardant. Among those various known flame retardants, a metal salt-based flame retardant, especially an organometallic salt-based compound is preferably used. Examples of the organometallic salt-based compound may include organic alkali metal salts and/or organic alkaline earth metal salts, and examples of the salts include various salts. Among them, an alkali metal salt and an organic alkaline earth metal salt of an organic acid or an organic acid ester having at least one carbon atom can be used.

In this case, the organic acid or the organic acid ester is, for example, an organic sulfonic acid or an organic carboxylic acid. And the alkali metal is, for example, lithium, sodium, potassium, or cesium, and the alkaline earth metal is, for example, magnesium, calcium, strontium, or barium. Among them, a salt of sodium or potassium is preferably used. The salt of the organic acid may be substituted with a halogen, such as fluorine, chlorine, or bromine. One of the alkali metal salts and the organic alkaline earth metal salts may be used alone, or two or more thereof may be used in combination.

In the case of, for example, an organic sulfonic acid, an alkali metal salt and an alkaline earth metal salt of a perfluoroalkanesulfonic acid disclosed in JP 47-40445 B1 among the various organic alkali metal salts and the various organic alkaline earth metal salts are preferably used. Examples of the perfluoroalkanesulfonic acid may include perfluoromethanesulfonic acid, perfluoroethanesulfonic acid, perfluoropropanesulfonic acid, perfluorobutanesulfonic acid, perfluoromethylbutanesulfonic acid, perfluorohexanesulfonic acid, perfluoroheptanesulfonic acid, and perfluorooctanesulfonic acid. A potassium salt of any such perfluoroalkanesulfonic acid is particularly preferably used.

In addition, for example, alkali metal salts and alkaline earth metal salts of organic sulfonic acids, such as an alkylsulfonic acid, benzenesulfonic acid, an alkylbenzenesulfonic acid, diphenylsulfonic acid, naphthalenesulfonic acid, 2,5-dichlorobenzenesulfonic acid, 2,4,5-trichlorobenzenesulfonic acid, diphenyl sulfone-3-sulfonic acid, diphenyl sulfone-3,3'-disulfonic acid, naphthalenetrisulfonic acid, and fluorine-substituted products thereof, and polystyrenesulfonic acid are exemplified. The organic sulfonic acids are particularly preferably a perfluoroalkanesulfonic acid and diphenylsulfonic acid.

The flame retardant aid is preferably used in combination with the flame retardant, and a polytetrafluoroethylene (PTFE) or an antimony oxide compound can be used. Among them, the PTFE is preferably used and a PTFE having a fibril-forming ability is desirably used. Powder mixture formed of PTFE particles and organic polymer particles is also desirably used. Specific examples of the monomer for producing the organic polymer particles may include: a styrene-based monomer; a (meth)acrylic acid alkyl ester-based monomer; a vinyl cyanide-based monomer; a vinyl ether-based

monomer; a vinyl carboxylate-based monomer; an olefin-based monomer; and a diene-based monomer. In particular, a (meth) acrylic acid alkyl ester-based monomer is preferably used. The (meth)acrylic acid alkyl ester-based monomer refers to both an acrylic acid alkyl ester-based monomer and a methacrylic acid alkyl ester-based monomer.

The polymerization of any such monomer provides the organic polymer particles. One of the monomers may be used alone, or two or more thereof may be used as a mixture. The organic polymer particles are preferably particles each formed of a (meth) acrylic acid alkyl ester-based copolymer.

Examples of the inorganic filler may include talc, mica, kaolin, diatomaceous earth, calcium carbonate, calcium sulfate, barium sulfate, glass fibers, carbon fibers, and potassium titanate fibers. Among them, talc, mica, or the like which is of a plate shape, or a fibrous filler, such as the glass fiber or the carbon fiber, is preferred.

An inorganic filler that blocks the light cannot be used for obtaining the transparency of a molded body, but the transparency can be obtained by using an inorganic filler that transmits light, such as a glass fiber. When the transparency is obtained by using the glass fiber, such a glass fiber that a difference in refractive index between the polycarbonate-based resin and the glass fiber is 0.02 or less is preferably used. In addition, the dimensional stability of a molded article to be obtained can be improved by using a glass fiber whose section has a flat shape as the glass fiber.

For example, afattyacidester, polyolefin-basedwax, fluorine oil, or paraffin wax may be used as the release agent. Among them, a fatty acid ester is preferred. Preferred examples thereof include partial esters, such as stearic acid monoglyceride, stearic acid diglyceride, stearic acid monosorbitate, behenic acid monoglyceride, pentaerythritol monostearate, pentaerythritol distearate, propylene glycol monostearate, and sorbitan monostearate.

Examples of the colorant include dyes, suchas aperylene-based dye, a coumarin-based dye, a thioindigo-based dye, an anthraquinone-based dye, a thioxanthone-based dye, a ferrocyanide, a perinone-based dye, a quinoline-based dye, and a phthalocyanine-based dye.

A method of producing the polycarbonate-based resin composition of the present invention is described below.

The polycarbonate-based resin composition of the present invention is obtained by: blending the above respective components, i.e., the polycarbonate-polyorganosiloxane copolymer (A-1) and the recycled material (A-2) containing a polycarbonate-based resin at the above-mentioned ratios, and other component to be used as required at a ratio within the above-mentioned range; and melt-kneading the components.

The blending and melt-kneading in this case may be performed by a method involving premixing with a typically used apparatus, such as a ribbon blender or a drum tumbler, and using, for example, a Henschel mixer, a Banbury mixer, a single-screw extruder, a twin-screw extruder, a multi-screw extruder, or a co-kneader.

In normal cases, a heating temperature at the time of the melt-kneading is appropriately selected from the range of from 240°C to 300°C.

The pellet and the molded body of the present invention each contain the polycarbonate-based resin composition produced as described above.

The molded body of the present invent ion can be obtained through molding using, as a raw material, the composition obtained by melt-kneading the polycarbonate-based resin composition produced as described above by using the melt-kneading machine or a pellet obtained from the composition, by an injection molding method, an injection compression molding method, an extrusion molding method, a blow molding method, a press molding method, a vacuum molding method, an expansion molding method, and the like.

The molded body can be particularly suitably obtained by producing a pellet-shaped molding raw material by the melt-kneading method, and then subjecting the pellet to injection molding or injection compression molding.

A gas injection molding method for preventing a sink mark on the external appearance of the molded body or for reducing the weight thereof can be adopted as the injection molding method.

The molded body of the present invention is excellent in impact resistance even when a recycled material whose deterioration has advanced is used as part of its raw materials.

## EXAMPLES

The present invention is described in more detail by way of Examples. However, the present invention is by no means limited by these Examples.

### Preparation Example 1

<Production of Polycarbonate Oligomer>

Sodium dithionite was added in an amount of 2,000 ppm with respect to bisphenol A (BPA) to be dissolved later to 5.6 mass% aqueous sodium hydroxide, and then bisphenol A was dissolved in the mixture so that the concentration of bisphenol A was 13.5 mass%. Thus, a solution of bisphenol A in aqueous sodium hydroxide was prepared.

The solution of bisphenol A in aqueous sodium hydroxide, methylene chloride, and phosgene were continuously

passed through a tubular reactor having an inner diameter of 6 mm and a tube length of 30 m at flow rates of 40 L (L is hereinafter used as an abbreviation of liter(s))/hr, 15 L/hr, and 4.0 kg/hr, respectively.

The tubular reactor had a jacket portion and the temperature of the reaction liquid was kept at 40°C or less by passing cooling water through the jacket.

The reaction liquid that had exited the tubular reactor was continuously introduced into a baffled tank reactor including a sweptback blade and having an internal volume of 40 L, and a reaction was performed by further adding a solution of BPA in aqueous sodium hydroxide, 25 mass% aqueous sodium hydroxide, water, and a 1 mass% aqueous solution of triethylamine to the reaction liquid at flow rates of 2.8 L/hr, 0.07 L/hr, 17 L/hr, and 0.64 L/hr, respectively. An aqueous phase was separated and removed by continuously extracting the reaction liquid overflowing from the tank reactor and leaving the reaction liquid at rest, followed by the collection of a methylene chloride phase.

A polycarbonate oligomer thus obtained had a concentration of 329 g/L and a chloroformate group concentration of 0.74 mol/L.

Production Example 1

<Production of Polycarbonate-polyorganosiloxane Copolymer (PC-PDMS Copolymer 1: (A-1))>

15 L of the polycarbonate oligomer solution produced in Preparation Example 1, 8.9 L of methylene chloride, 384 g of an o-allylphenol terminal-modified PDMS having an average number n of repetitions of dimethylsiloxane repeating units of 90, and 8.8 mL of triethylamine were loaded into a 50 L tank reactor with a baffle board, a paddle type stirring blade, and a cooling jacket. 1,389 g of 6.4 mass% aqueous sodium hydroxide was added to the mixture under stirring to perform a reaction between the polycarbonate oligomer and the allylphenol terminal-modified PDMS for 10 minutes.

A solution of *p*-*t*-butylphenol (PTBP) in methylene chloride (prepared by dissolving 142 g of PTBP in 2.0 L of methylene chloride) and a solution of bisphenol A in aqueous sodium hydroxide (prepared by dissolving 1,147 g of bisphenol A in an aqueous solution prepared by dissolving 581 g of sodium hydroxide and 2.3 g of sodium dithionite in 8.5 L of water) were added to the polymerization liquid to perform a polymerization reaction for 50 minutes.

10 L of methylene chloride was added to the resultant for dilution and then the mixture was stirred for 10 minutes. After that, the mixture was separated into an organic phase containing a PC-PDMS copolymer, and an aqueous phase containing excess amounts of bisphenol A and sodium hydroxide, and then the organic phase was isolated.

The solution of the PC-PDMS copolymer in methylene chloride thus obtained was sequentially washed with 0.03 mol/L aqueous sodium hydroxide and 0.2 mol/L hydrochloric acid in amounts of 15 vol% each with respect to the solution. Next, the solution was repeatedly washed with pure water until an electric conductivity in an aqueous phase after the washing became 0.01 μS/m or less.

The solution of the PC-PDMS copolymer in methylene chloride after washing was concentrated and pulverized, and then the resultant flake was dried under reduced pressure at 120°C. Thus, a PC-PDMS copolymer 1 was produced.

The resultant PC-PDMS copolymer 1 had a POS block content determined by $^1$H-NMR of 6.0 mass%, a viscosity number of 47.1, and a viscosity-average molecular weight Mv of 17,500.

Production Example 2

<Production of Polycarbonate-polyorganosiloxane Copolymer (PC-PDMS Copolymer 2: (A-1))>

A PC-PDMS copolymer 2 was produced in the same manner as in Production Example 1 using an o-allylphenol terminal-modified PDMS having an average number n of repetitions of dimethylsiloxane repeating units of 40.

The resultant PC-PDMS copolymer 2 had a POS block content determined by $^1$H-NMR of 6. 0 mass%, a viscosity number of 47.1, and a viscosity-average molecular weight Mv of 17,500.

Recycled material (A-2): TARFLON CNN 2510 PB (manufactured by Idemitsu Kosan Co., Ltd., a product obtained by pelletizing a market recovered pulverized product of an OA equipment part made from a PC/HIPS alloy)

Examples 1 to 6, Reference Examples 1 to 4, and Comparative Examples 1 to 4

Respective components were mixed at ratios shown in Table 1 (numerical values for the respective components in the table each represent the parts by mass of a component in a resin composition), and were granulated with a vented twin-screw extruder (manufactured by Toshiba Machine Co., Ltd., TEM-35B) at a resin temperature of 280°C to provide a pellet.

[Method of measuring a Ratio of Terminal Hydroxyl Groups]

250 mg of a sample was collected in an NMR sample tube having a diameter of 10 mm, and 3 ml of deuterated chloroform was added to uniformly dissolve the sample. The $^{13}C$-NMR spectrum of the solution was measured with an NMR apparatus (manufactured by Bruker BioSpin, AVANCE III HD 400 MHz). The measurement was performed under the conditions of a pulse width: 45°, a pulse repetition time: 4 seconds, and the number of scans: 1,000.

The peak top of deuterated chloroform was set to 77.07 ppm, and a ratio of terminal hydroxyl groups was calculated from the following equation by using a peak intensity (a) of aromatic ring carbon at an ortho position to a OH group of bisphenol A (BPA) observed at 114.8 ppm in the $^{13}C$-NMR spectrum, and a peak intensity (b) derived from the aromatic ring of a *p-tert*-butylphenoxy group (PTBP) observed at 126.4 ppm in the spectrum.

$$\text{A ratio of terminal hydroxyl groups (mol\%)} = (a/2)/(a/2 + b/2) \times 100$$

With regard to each of Examples and Comparative Examples except Reference Examples, the ratio of terminal hydroxyl groups was determined by calculation from the blending ratios of resin components.

[Content of POS Block]

With regard to each of Examples and Comparative Examples except Reference Examples, the content of a POS block was determined by calculation from the blending ratios of the resin components.

[Performance Evaluations]

The pellet obtained by the above method was dried with a hot-air dryer at 80°C for 5 hours, and subjected to injection molding with an injection molding machine (manufactured by Toshiba Machine Co. , Ltd. ; IS100EN) under the molding conditions of a cylinder temperature of 250°C and a mold temperature of 40°C to provide a test piece. The following measurements were performed by using the resultant test piece.

(1) Impact Resistance

A test piece having a thickness of 3.2 mm was subjected to a notched Izod impact test at 23°C in conformity with ASTM D256.

(2) Flowability

A spiral flow length (SFL) (cm) at the time of the molding of the pellet obtained in each example with a spiral flow mold having a cylinder temperature of 250°C, a mold temperature of 40°C, a thickness of 2.0 mm, and a width of 10 mm at a pressure set to 125 MPa was measured.

(3) Flame Retardancy

A vertical flame test was performed by using a test piece having a thickness of 1/16 inch produced in conformity with UL standard 94. Each test piece was evaluated as a rank V-0, V-1, or V-2 on the basis of the result of the test, and a test piece that did not reach any one of the ranks was evaluated as V-out.

Table 1-1

| | | Unit | Examples | | | | | |
|---|---|---|---|---|---|---|---|---|
| | | | 1 | 2 | 3 | 4 | 5 | 6 |
| (A-1) | Production Example 1 | mass% | 30 | 50 | 70 | | | |
| | Production Example 2 | | | | | 30 | 50 | 70 |
| (A-2) | Recycled material | | 70 | 50 | 30 | 70 | 50 | 30 |
| PC | A1700 | | | | | | | |

(continued)

| | | Unit | Examples | | | | | |
|---|---|---|---|---|---|---|---|---|
| | | | 1 | 2 | 3 | 4 | 5 | 6 |
| Impact resistance | Value of Notched Izod impact strength at 23°C | J/m | 360 | 520 | 620 | 290 | 480 | 560 |
| | Impact Strength theoretical value | | 270 | 390 | 510 | 267 | 385 | 503 |
| | Deviation from theoretical value | | 90 | 130 | 110 | 23 | 95 | 57 |
| | | % | 33 | 33 | 22 | 9 | 25 | 11 |
| Flowability | SFL 250°C, 40°C, 125 MPa | cm | 33 | 25 | 20 | 33 | 25 | 19 |
| Flame retardancy | UL94 1/16 inch | - | V-1 | V-1 | V-out | V-2 | V-2 | V-2 |
| n | | - | 90 | 90 | 90 | 40 | 40 | 40 |
| Amount of POS | | mass% | 1.8 | 3.0 | 4.2 | 1.8 | 3.0 | 4.2 |
| Amount of OH | | mol% | 12.8 | 9.2 | 5.5 | 13.5 | 10.4 | 7.2 |
| Amount of PTBP | | mol% | 87.2 | 90.8 | 94.5 | 86.5 | 89.6 | 92.8 |

Table 1-2

| | | Unit | Reference Examples | | | | Comparative Examples | | | |
|---|---|---|---|---|---|---|---|---|---|---|
| | | | 1 | 2 | 3 | 4 | 1 | 2 | 3 | 4 |
| (A-1) | Production Example 1 | mass% | 100 | | | | | | | |
| | Production Example 2 | | | 100 | | | | | | 10 |
| (A-2) | Recycled material | | | | 100 | | 70 | 50 | 30 | 90 |
| PC | A1700 | | | | | 100 | 30 | 50 | 70 | |
| Impact resistance | Value of Notched Izod impact strength at 23°C | J/m | 690 | 680 | 90 | 690 | 110 | 110 | 120 | 130 |
| | Impact Strength theoretical value | | - | - | - | - | 270 | 390 | 510 | 149 |
| | Deviation from theoretical value | | - | - | - | - | -160 | -280 | -390 | -19 |
| | | % | - | - | - | - | -58 | -71 | -76 | -13 |
| Flowability | SFL 250°C, 40°C, 125 MPa | cm | 13 | 13 | 33 | 12 | 33 | 20 | 19 | 42 |
| Flame retardancy | UL94 1/16 inch | - | V-2 | V-2 | V-1 | V-2 | V-out | V-out | V-2 | V-out |
| n | | - | 90 | 40 | - | - | - | - | - | 40 |
| Amount of POS | | mass% | 6.0 | 6.0 | 0.0 | 0.0 | 0.0 | 0.0 | 0.0 | 0.6 |
| Amount of OH | | mol% | Not detected | 2.4 | 18.3 | 4.7 | 14.2 | 11.5 | 8.8 | 16.7 |
| Amount of PTBP | | mol% | 100.0 | 97.6 | 81.7 | 95.3 | 85.8 | 88.5 | 91.2 | 83.3 |
| Mv | | | 17,500 | 17,500 | - | 17,500 | - | - | - | - |

Reference Examples 1 and 2 correspond to the polycarbonate-polyorganosiloxane copolymers (A-1) corresponding to Production Examples 1 and 2, respectively.

The impact strength theoretical value was determined as described below. In the case of Example 1 containing 30 mass% of the (A-1) having an Izod impact characteristic value at 23°C of 690 and 70 mass% of the (A-2) having an Izod impact characteristic value at 23°C of 90, the impact strength theoretical value equals $(690\times0.3) + (90\times0.7) = 270$.

INDUSTRIAL APPLICABILITY

The polycarbonate-based resin composition obtained in the present invention is suitably used in, for example, casings for OA equipment and for electrical and electronic products.

## Claims

1. A polycarbonate-based resin composition, comprising a polycarbonate-based resin composition (A) comprising:

   90 mass% to 10 mass% of a polycarbonate-polyorganosiloxane copolymer (A-1) having a polycarbonate block containing a repeating unit represented by the following general formula (I), and a polyorganosiloxane block containing a siloxane repeating unit represented by the following general formula (II); and
   10 mass% to 90 mass% of a recycled material (A-2) containing a polycarbonate-based resin,
   wherein a content of a polyorganosiloxane block moiety in the polycarbonate-based resin composition is from 0.7 mass% to 40 mass%:

   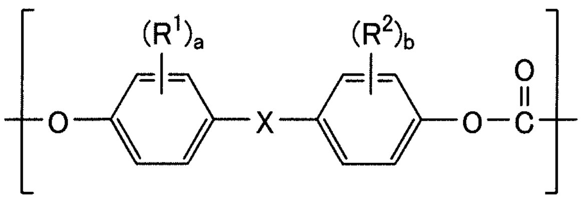

   (I)

   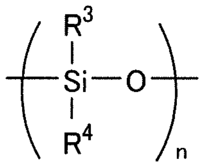

   (II)

   wherein:

   $R^1$ and $R^2$ each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, $-SO_2-$, -O-, or -CO-, and a and b each independently represent an integer of from 0 to 4; and
   $R^3$ and $R^4$ each independently represent a hydrogen atom, a halogen atom, an alkyl group having 1 to 6 carbon atoms, an alkoxy group having 1 to 6 carbon atoms, or an aryl group having 6 to 12 carbon atoms, and an average number n of repetitions represents a total number of siloxane repeating units in the polyorganosiloxane block.

2. The polycarbonate-based resin composition according to claim 1, wherein a ratio of terminal hydroxyl groups in the polycarbonate-based resin composition is from 5 mol% to 70 mol%.

3. The polycarbonate-based resin composition according to claim 1 or 2, wherein a ratio of terminal hydroxyl groups in the component (A-2) is from 7 mol% to 70 mol%.

4. The polycarbonate-based resin composition according to any one of claims 1 to 3, wherein a ratio of terminal hydroxyl

groups in the copolymer (A-1) is less than 5 mol%.

5. The polycarbonate-based resin composition according to any one of claims 1 to 4, wherein n in the general formula (II) represents from 20 to 500.

6. The polycarbonate-based resin composition according to any one of claims 1 to 5, wherein the polyorganosiloxane block containing the siloxane repeating unit represented by the general formula (II) is represented by the following general formula (II') or the following general formula (II"):

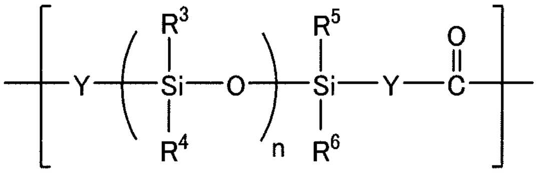

( II' )

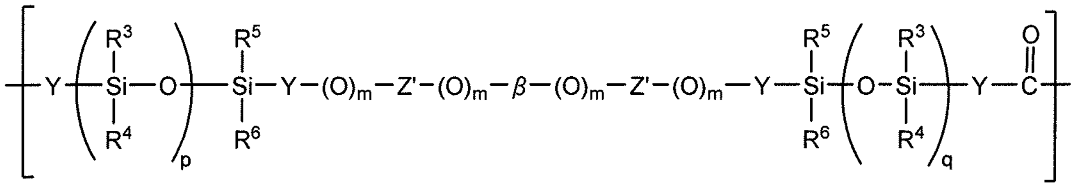

(II")

wherein

$R^3$ to $R^6$ each independently represent a hydrogen atom, a halogen atom, an alkyl group having 1 to 6 carbon atoms, an alkoxy group having 1 to 6 carbon atoms, or an aryl group having 6 to 12 carbon atoms, Y represents a single bond, or a divalent organic residue containing -C(=O)-, an aliphatic group, or an aromatic group, n represents an average number of repetitions, Z' represents a single bond, $-R^7O-$, $-R^7COO-$, $-R^7NH-$, -COO-, or -S-, and the $R^7$ represents a linear, branched, or cyclic alkylene group, an aryl-substituted alkylene group that may have an alkoxy group on an aromatic ring thereof, an arylene group, or a diarylene group, β represents a divalent group derived from a diisocyanate compound or a divalent group derived from a dicarboxylic acid, m represents 0 or 1, and a sum of p and q is equal to n, and represents an average number of repetitions.

7. The polycarbonate-based resin composition according to any one of claims 1 to 6, wherein a content of the polyorganosiloxane block moiety in the copolymer (A-1) is from 1.0 mass% to 50 mass%.

8. The polycarbonate-based resin composition according to any one of claims 1 to 7, wherein a viscosity-average molecular weight of the copolymer (A-1) is from 10,000 to 30,000.

9. A pellet, comprising the polycarbonate-based resin composition of any one of claims 1 to 8.

10. A molded article, comprising the polycarbonate-based resin composition of any one of claims 1 to 8.

**INTERNATIONAL SEARCH REPORT**

International application No.
PCT/JP2015/076057

A. CLASSIFICATION OF SUBJECT MATTER
*C08L69/00*(2006.01)i, *C08G64/08*(2006.01)i, *C08J5/00*(2006.01)i

According to International Patent Classification (IPC) or to both national classification and IPC

B. FIELDS SEARCHED

Minimum documentation searched (classification system followed by classification symbols)
C08L69/00, C08G64/00-64/42, C08J5/00-5/24

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)
JSTPlus/JMEDPlus/JST7580(JDreamIII)

C. DOCUMENTS CONSIDERED TO BE RELEVANT

| Category* | Citation of document, with indication, where appropriate, of the relevant passages | Relevant to claim No. |
|---|---|---|
| X | JP 2012-25819 A (Idemitsu Kosan Co., Ltd., Panac Industries, Inc.), 09 February 2012 (09.02.2012), claims 1 to 10; paragraphs [0001], [0007], [0010], [0031], [0038], [0078]; examples; tables 1 to 4 & US 2013/0018115 A1 claims; paragraphs [0001], [0146], [0147]; examples & WO 2011/078334 A1 & EP 2517855 A1 & TW 201132480 A & CN 102892561 A & KR 10-2012-0135211 A | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 October 2015 (02.10.15) | 13 October 2015 (13.10.15) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (July 2009)

**INTERNATIONAL SEARCH REPORT**

International application No.
PCT/JP2015/076057

C (Continuation). DOCUMENTS CONSIDERED TO BE RELEVANT

| Category* | Citation of document, with indication, where appropriate, of the relevant passages | Relevant to claim No. |
|---|---|---|
| A | JP 2012-246430 A (Idemitsu Kosan Co., Ltd.), 13 December 2012 (13.12.2012), entire text & US 2014/0106208 A1 entire text & WO 2012/165373 A1 & EP 2716713 A1 & TW 201247773 A & CN 103562312 A & KR 10-2014-0041510 A | 1-10 |
| A | JP 2012-102179 A (Idemitsu Kosan Co., Ltd.), 31 May 2012 (31.05.2012), entire text & US 2013/0303672 A1 entire text & WO 2012/063652 A1 & EP 2639271 A1 & TW 201219490 A & CN 103189450 A & KR 10-2013-0132425 A | 1-10 |
| A | WO 2012/26236 A1 (Idemitsu Kosan Co., Ltd.), 01 March 2012 (01.03.2012), entire text & JP 5739892 B & WO 2012/026236 A1 & CN 103068921 A & KR 10-2013-0100274 A & TW 201209097 A | 1-10 |
| A | WO 2011/155490 A1 (Idemitsu Kosan Co., Ltd.), 15 December 2011 (15.12.2011), entire text & JP 5755226 B & US 2013/0082222 A1 entire text & WO 2011/155490 A1 & EP 2581413 A1 & CN 102933657 A & KR 10-2013-0111213 A & TW 201202340 A | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2011131507 A
- JP 2014105276 A
- JP 2010241943 A
- JP 47040445 B